Europäisches Patentamt

(19) European Patent Office

Office européen des brevets

(11) Publication number: **0 157 169**
A2

(12) **EUROPEAN PATENT APPLICATION**

(21) Application number: **85102122.0**

(22) Date of filing: **27.02.85**

(51) Int. Cl.⁴: **F 16 D 65/02**

(30) Priority: **04.04.84 US 596780**

(43) Date of publication of application: **09.10.85**
Bulletin **85/41**

(84) Designated Contracting States: **DE FR GB**

(71) Applicant: **ALLIED CORPORATION, Columbia Road and Park Avenue P.O. Box 2245R (Law Dept.), Morristown New Jersey 07960 (US)**

(72) Inventor: **Gumkowshi, Bert Alex, 26219 Swallow Court, South Bend Indiana 46614 (US)**
Inventor: **Oltmanns, Roger William, Jr., 24869 Kern Road, South Bend Indiana 46614 (US)**

(74) Representative: **Brullé, Jean et al, Service Brevets Bendix 44, rue François 1er, F-75008 Paris (FR)**

(54) Friction element anti-rattle spring.

(57) The anti-rattle spring (44) provides for resilient loading between a pin mounted friction element carrier (39) and a pin (40) of a disc brake assembly (10). The disc brake assembly (10) includes a friction element carrier (39) having two ear tabs (33, 35) with apertures (36, 37) therein. The apertures (36, 37) receive axial pins (40) inserted therethrough for mounting the friction element carrier (39) to the disc brake assembly (10). One aperture (36) communicates with a positioning recess (43) disposed in the ear tab (33), the positioning recess (43) providing an area for positioning the anti-rattle spring (44) relative to the aperture (36) and friction element carrier (39). The anti-rattle spring (44) comprises a body portion (46) defining a loop with legs (50, 54) extending outwardly therefrom, one leg (50) being bent over in a U-shaped portion received in the positioning recess (43) and having a projection part (61) extending from one end of an aperture (57) to engage the surface of the friction element carrier (39), and the other leg (54) having a trough-shaped portion (55) extending toward the center of the aperture (36). The trough-shaped portion (55) engages the pin (40) inserted into the one aperture (36) and is bent downwardly to be positioned over the positioning recess (43). The resilient loading between the friction element carrier (39) and pin (40) eliminates any noise-generating movement during the braking cycle and travel over uneven terrain.

## FRICTION ELEMENT ANTI-RATTLE SPRING

The invention relates to a friction element anti-rattle spring for eliminating noise-generating movement between the friction element and a support pin.

A standard disc brake assembly includes a caliper slidably mounted in a recess of a torque member having a pair of upwardly extending arms, the torque member arms including apertures each for receiving a pin therein. The pins support a pair of friction elements by means of pin receiving apertures in tabs or ears of the friction element carriers. Due to manufacturing tolerances, the diameter of one of the apertures formed in an ear of the friction element carrier is larger than the diameter of the pin inserted therethrough. As a result, there is a gap between the enlarged aperture and the pin such that travel of the vehicle over uneven terrain or brake application may cause noise generating movement between the pin and enlarged aperture. In order to eliminate the rattle that can occur by the pin engaging the circumference of the enlarged aperture, it is necessary to provide a resilient spring or other means for eliminating the relative movement between the carrier and pin.

Johannesen U. S. Patent No. 3,977,499 issued August 31, 1976 and entitled "DISC BRAKE SHOE ANTI-RATTLE CLIP" provides a resilient loop-shaped anti-rattle clip suitable for insertion between an edge of the torque member and the friction element carrier. However, this anti-rattle clip is not suitable for insertion within an aperture of a friction element carrier of a disc brake having a pair of pins for slidably mounting the friction element carriers to the torque member. Therefore, it is desirable to provide an improved anti-rattle spring designed particularly for a disc brake assembly having pin mounted, axially slidable friction elements and which will eliminate noise-generating movement between the pin and the friction element carrier.

The invention comprises an anti-rattle spring designed to provide resilient loading between a pin-mounted brake pad and the pin of a disc brake assembly. The disc brake assembly includes a friction element carrier having ear tab portions with apertures therein, the apertures receiving pins inserted therethrough for mounting the friction element to the torque member. One aperture is enlarged and communicates with an adjacent positioning recess, the positioning recess providing an area for receiving and mounting the anti-rattle spring relative to the aperture and associated pin. The anti-rattle spring comprises a body portion defining a loop with legs extending outwardly therefrom, one leg bent over in a U-shaped portion received in the positioning recess and having a projection part extending from one end of an opening to engage the surface of the friction element carrier, and the other leg having a trough-shaped portion and extending toward the center of the aperture. The trough-shaped portion engages the pin inserted into the aperture and is bent downwardly toward the positioning recess. The resilient loading between the friction element carrier and the axial pin eliminates any noise-generating movement during the braking cycle and movement of the vehicle.

Figure 1 is a fragmentary side elevational view of the disc brake assembly having an anti-rattle spring made pursuant to the present invention;

Figure 2 is a cross-sectional view taken substantially along line 2-2 of Figure 1;

Figure 3 is a side view of a friction element carrier of the brake assembly;

Figure 4 is an enlarged, perspective view of the anti-rattle spring used in the brake assembly of Figure 1; and

Figure 5 is a cross-sectional view taken substantially along view line 5-5 of Figure 1.

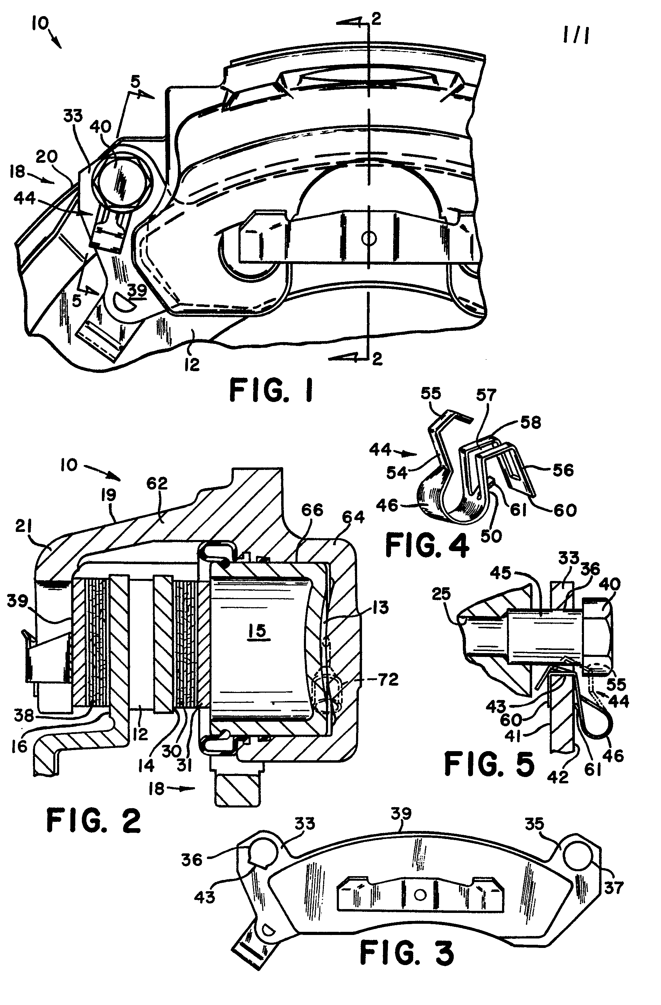

Referring now to the drawings, a brake assembly indicated generally by reference numeral 10 includes a rotor 12 having opposed friction faces 14 and 16. The torque member indicated generally by reference numeral 18 includes a pair of circumferentially spaced arms, such as

- 3 -

U157169

arm 20, which define a recess (not shown) therebetween. Each of the torque member arms has an axial opening for receiving therein an associated pin, such as pin 40 received in the axial opening 25 of arm 20 (see Figure 5). Brake assembly 10 further includes a first friction element 30 disposed adjacent the friction face 14 and a second friction element 38 disposed adjacent the friction face 16. The friction element 38 is provided with a carrier 39 having a pair of ear tabs 33, 35 (Figure 3) projecting from the respective ends thereof. Ear tabs 33, 35 have apertures 36, 37, respectively, for receiving pins 40 therein. Thus, friction element 38 and associated carrier 39 are slidably mounted upon pins 40 which are received in their respective torque member axial openings such as opening 25. Aperture 36 is in communication with a recess 43 disposed at a portion of the circumference of aperture 36.

The friction elements 30 and 38 are urged into frictional engagement with their corresponding friction faces 14 and 16, respectively, by an actuating member or caliper 62 (see Figure 2) which includes a housing 64 defining a bore 66 therewithin. The bore receives an actuating piston 15 to define a variable volume fluid chamber 13, therebetween. The other end of the piston 15 operatively engages the carrier 31 of friction element 30. When a brake application is effected, pressurized fluid developed in the vehicle's master cylinder (not shown) is communicated to variable volume chamber 13 through an inlet port 72.

Caliper 62 further includes a bridge portion 19 which extends across the periphery of the rotor 12, and a radially inwardly extending portion 21 disposed adjacent the friction face 16 and engaging friction element carrier 39. The caliper 62 is slidably mounted on the torque member 18 by elongated bearing surfaces which extend generally parallel to the rotor's axis of rotation.

An anti-rattle spring, indicated generally by reference numeral 44 in Figure 4, is located between the recess 43 and the pin 40 in order to provide resilient loading therebetween. The resilient loading compensates for manufacturing tolerances which require that aperture 36 be sized larger than its associated pin 40. Spring 44 includes a loop-shaped body portion 46 having a pair of legs 50 and 54. Leg 50 comprises a pair of U-shaped leg portions 56, 58 extending therefrom with aperture 57 therebetween. Extending from one end of aperture 57 is a projection part 61 for engaging the surface of friction element carrier 39 to prevent disengagement of spring 44 from its mounted position upon carrier 39. Leg portions 56 and 58 terminate in a transverse section 60 which maintains legs 56 and 58 in proper alignment and forms the opposite end of the U-shaped leg portions. Leg 54 extends outwardly and is looped over in a trough-shaped portion 55 which will extend within carrier aperture 36.

When the brake assembly 10 is assembled, leg portions 56 and 58 of anti-rattle spring 44 are positioned within the recess 43 such that transverse section 60 is positioned on the opposite, interior surface 41 of carrier 39 and projection 61 engages the front surface 42. Projection 61 maintains the mounted position of spring 44 so that it will not become dislodged from carrier 39 during subsequent handling and assembly of disc brake 10. Friction element 38 and associated carrier 39 with spring 44 mounted thereon, are then placed adjacent the torque member and pins 40 inserted through the respective apertures 36, 37 to position and mount friction element 38 adjacent the associated friction face 16. When pin 40 is inserted into aperture 36, the shaft of the pin engages trough-shaped portion 55 of spring 44. Further insertion of pin 40 causes enlarged diameter portion 45 (see Figure 5) to enter aperture 36 and bend downwardly (radially outwardly of aperture 36) the trough-shaped portion 55, whereby portion 55 is received within the U-shaped aperture 57. Leg portions 56 and 58 remain within the recess 43 so that they are not in direct engagement with pin 40, but are positioned so that trough-shaped portion 55 may be received therebetween. Thus, anti-rattle spring 44 provides resilient loading between friction element carrier 39 and mounting pin 40 to eliminate effectively any noise that could be generated during movement of the vehicle and the braking cycle.

When a brake application is effected, pressurized fluid is communicated to chamber 13 and urges piston 15 to the left when viewing Figure 2. Because friction element 30 operatively engages piston 15, movement of the piston urges friction element 30 into engagement with friction face 14. Caliper 62 is slidaby mounted on torque member 18 such that fluid pressure in chamber 13 exerts a reaction force on the caliper, which acts through bridge portion 19 and inwardly extending portion 21 to urge friction element 38 into engagement with friction face 16. During brake application, there is normally some slight pivotal movement of carrier 39 about the pin inserted in aperture 37, because of the gap between aperture 36 and enlarged diameter portion 45 of pin 40. The anti-rattle spring compensates for the gap by providing resilient loading between pin 40 and aperture 36 to prevent any rotational movement of carrier 39 about the pin disposed in aperture 37, and thereby eliminate any noise that would be caused by pin 40 engaging the circumference of aperture 36. Noise generating movement is also prevented during normal driving conditions which may include travel over uneven terrain.

Various modifications of the above-described embodiment of the invention will be apparent to those skilled in the art. It is to be understood that such modifications can be made without departing from the scope of the invention.

## FRICTION ELEMENT ANTI-RATTLE SPRING

### CLAIMS

1. In a disc brake having a rotor including a pair of opposed friction faces, a torque member disposed adjacent said rotor and having a pair of pin openings, a friction element slidably mounted on pins received in said openings, said friction element having apertures receiving said pins and the apertures each disposed adjacent an end of said element, one of said apertures cooperating with its corresponding pin to define a gap therebetween, means for urging said friction element into braking engagement with the corresponding friction face of the rotor, and anti-rattle means including a resilient sheet metal body portion, characterized in that the body portion defines a loop adjacent said gap, said one aperture being adjacent a positioning recess in communication with a portion of said one aperture, said loop having a plurality of legs and an axis extending substantially parallel to the surface of the friction element, the legs comprising substantially flat, homogenous sheet metal legs extending from said loop to said gap whereby the resiliency of said body portion spreads said legs so that one of said legs engages said positioning recess and the other of said legs engages the corresponding pin to restrain rattling movement of the friction element during a braking cycle, said one leg having an opening with a projection part projecting outwardly into engagement with said surface of the friction element to bias the body portion away from said surface and thereby provide securement of the anti-rattle means to the friction element, insertion of the associated pin into said one aperture causing engagement of the pin with the other leg to bias the other leg toward the positioning recess and thereby provide resilient loading between said friction element and pin to eliminate noise-generating movement therebetween.

2. The disc brake in accordance with claim 1, characterized in that the one leg of said anti-rattle means is generally U-shaped with an aperture disposed in the U-shaped portion of the leg and from one end of said aperture the projection part extends inwardly of the U-shaped portion.

3. The disc brake in accordance with claim 1, characterized in that the other leg comprises a generally trough-shaped leg extending toward the center of said one aperture whereby insertion of the associated pin into the aperture causes said pin to engage and bend radially outwardly the trough-shaped leg toward the positioning recess.

FIG. 1

FIG. 2

FIG. 3

FIG. 4

FIG. 5